(19) Europäisches Patentamt
European Patent Office
Office européen des brevets

(11) EP 3 098 889 B1

(12) # FASCICULE DE BREVET EUROPEEN

(45) Date de publication et mention de la délivrance du brevet:
**15.03.2023 Bulletin 2023/11**

(21) Numéro de dépôt: **16170547.0**

(22) Date de dépôt: **20.05.2016**

(51) Classification Internationale des Brevets (IPC):
***H01M 8/2465*** (2016.01) ***H01M 8/0206*** (2016.01)
***B23K 20/02*** (2006.01) ***B32B 15/01*** (2006.01)
***B32B 1/08*** (2006.01) ***C25B 9/65*** (2021.01)

(52) Classification Coopérative des Brevets (CPC):
**H01M 8/0206; B23K 20/021; B32B 1/08; B32B 15/015; C25B 9/65; H01M 8/2465;**
H01M 2008/1293; Y02E 60/36; Y02E 60/50

(54) **DISPOSITIF D'AMENÉE DE COURANT ÉLECTRIQUE SUR UN ÉLECTROLYSEUR OU UNE PILE À COMBUSTIBLE HAUTE TEMPÉRATURE**

STROMZUFÜHRUNGSVORRICHTUNG ZU EINEM ELEKTROLYSEGERÄT ODER EINER HOCHTEMPERATUR-BRENNSTOFFZELLE

DEVICE FOR SUPPLYING ELECTRIC CURRENT TO AN ELECTROLYSER OR A HIGH-TEMPERATURE FUEL CELL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2015 FR 1554794**

(43) Date de publication de la demande:
**30.11.2016 Bulletin 2016/48**

(73) Titulaire: **COMMISSARIAT À L'ÉNERGIE ATOMIQUE ET AUX ÉNERGIES ALTERNATIVES**
**75015 Paris (FR)**

(72) Inventeurs:
- **CHATROUX, André**
  **38210 Tullins (FR)**
- **LEIBOLD, Jean-Marc**
  **38800 Pont de Claix (FR)**
- **PETITJEAN, Marie**
  **38000 Grenoble (FR)**
- **PLANQUE, Michel**
  **38180 Seyssins (FR)**
- **RIGAL, Emmanuel**
  **38360 Sassenage (FR)**

(74) Mandataire: **Cabinet Laurent & Charras**
**Le Contemporain**
**50 Chemin de la Bruyère**
**69574 Dardilly Cedex (FR)**

(56) Documents cités:
**CN-U- 202 608 143** **DE-A1- 3 216 628**
**DE-A1- 3 910 603** **FR-A1- 2 779 983**
**US-A1- 2010 086 824** **US-B1- 7 977 845**

- **K. Bhanumurthy: "Diffusion Bonding of Nuclear Materials", BARC Newsletter, 331, 1 avril 2013 (2013-04-01), pages 19-25, XP002755914,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

### DOMAINE DE L'INVENTION

L'invention concerne les dispositifs électrochimiques à haute température, tels que les piles à combustible et les électrolyseurs à oxydes solides, et plus particulièrement l'alimentation en courant électrique d'un empilement de cellules électrochimiques dans la zone chaude.

### ETAT DE LA TECHNIQUE

Comme cela est connu en soi, un électrolyseur de vapeur d'eau ($H_2O$) à haute température, ou électrolyseur EVHT (pour « électrolyse de la vapeur d'eau à haute température »), comprend un empilement de plusieurs cellules électrochimiques élémentaires à oxyde solide. En se référant à la figure 1, une cellule à oxyde solide **10,** ou « SOC » (acronyme anglo-saxon « *Solid Oxide Cell* ») comprend notamment :

a) une première électrode conductrice poreuse **12,** ou « cathode », destinée à être alimentée en vapeur d'eau pour la production de dihydrogène,
b) une seconde électrode conductrice poreuse **14,** ou « anode », par laquelle s'échappe le dioxygène ($O_2$) produit par l'électrolyse de l'eau injectée sur la cathode, et
c) une membrane à oxyde solide (électrolyte dense) **16** prise en sandwich entre la cathode **12** et l'anode **14,** la membrane **16** étant conductrice anionique pour de hautes températures, usuellement des températures supérieures à 600°C.

En chauffant la cellule **10** au moins à cette température et en injectant un courant électrique *I* entre la cathode **12** et l'anode **14,** il se produit alors une réduction de l'eau sur la cathode **12,** ce qui génère du dihydrogène ($H_2$) au niveau de la cathode **12** et du dioxygène au niveau de l'anode **14.**

Un empilement **20** de telles cellules, ou « stack », ayant pour but de produire une quantité importante d'hydrogène, est illustré par la vue schématique de la figure 2. Notamment, les cellules **10** sont empilées les unes sur les autres en étant séparées par des plaques d'interconnexion **18.** Ces plaques ont pour fonction à la fois d'assurer la continuité électrique entre les différentes électrodes des cellules **10,** permettant ainsi une mise en série électrique de celles-ci, et de distribuer les différents gaz nécessaires au fonctionnement des cellules, ainsi que le cas échéant un gaz porteur pour aider à l'évacuation des produits de l'électrolyse et/ou à la gestion thermique de l'empilement.

Pour ce faire, les plaques **18** sont connectées à une alimentation **22** en vapeur d'eau pour l'injection de cette vapeur sur les cathodes des cellules **10** conformément à un débit de vapeur d'eau $D_{H_2O}$ constant réglé par une vanne pilotable **24.** Les plaques **18** sont également connectées à un collecteur de gaz **26** pour la collecte des gaz issus de l'électrolyse. Un exemple d'empilement et de structure de plaque d'interconnexion sont par exemple décrits dans le document WO 2011/110676.

Pour la mise en oeuvre effective de l'électrolyse par l'empilement **20,** l'empilement est porté à une température supérieure à 600°C, usuellement une température comprise entre 650°C et 900°C, l'alimentation en gaz est mise en marche à débit constant et une source d'alimentation électrique **28** est branchée entre deux bornes **30, 32** de l'empilement **20** afin d'y faire circuler un courant *I*.

L'intensité *I* du courant électrique est usuellement de l'ordre de quelques centaines d'ampères, ce qui génère d'importantes pertes thermiques par effet Joule dans les conducteurs électriques. Pour optimiser l'efficacité énergétique des systèmes électrochimiques à oxyde solide, il convient de limiter ces pertes thermiques en développant en particulier des conducteurs électriques, également désignés par l'expression « cannes d'amenée de courant », spécifiques.

Une canne d'amenée de courant dans l'empilement se présente généralement sous la forme d'une tige métallique. Prenant l'exemple d'une tige cylindrique, la résistance électrique *R* s'exprime par la formule suivante:

$$R = \rho \times \frac{l}{S}$$

où $\rho$ est la résistivité linéique de la tige (en $\Omega.\ m$), *l* est la longueur de la tige (en *m*) et *S* est la section de la tige (en $m^2$).

Les pertes par effet Joule étant proportionnelles à la résistance *R*, pour limiter cet effet, il convient donc de réduire la résistance électrique de la canne d'amenée de courant. Les optimisations possibles consistent donc à :

- limiter la longueur de la tige,
- augmenter sa section,
- trouver un matériau avec une résistivité moindre et stable à haute température.

Les deux premières possibilités sont des choix de géométrie qui dépendent généralement de la forme du système électrochimique. Il existe donc des contraintes les concernant et/ou les cannes de l'état de la technique sont déjà optimisées vis-à-vis du système électrochimique. Le dernier point concerne le matériau constitutif de la tige qu'il faut choisir avec une résistivité minimale pour réduire les pertes ohmiques.

Jusqu'alors, l'optimisation de ce dernier point n'a pas été prise en considération. En effet, pour tous les développements en laboratoire de la technologie, l'efficacité énergétique n'est pas primordiale. En revanche, comme expliqué ci-dessous, une canne d'amenée de courant est baignée dans un environnement très corrosif, de sorte que la solution standard mise en oeuvre consiste à utiliser des tiges pleines en alliage inoxydable, lesquelles constituent donc la solution de référence dans toutes les publications internationales.

Si la résistivité à température ambiante (20°C) de ces tiges est déjà élevée, de l'ordre de $75.10^{-8}$ Ω.m, il faut savoir que cette résistivité augmente fortement avec la température.

Ainsi, à 900°C, qui est une température courante de fonctionnement d'un électrolyseur à oxyde solide, la résistance électrique d'une tige en acier inoxydable est égale à 117. $10^{-8}$ Ω.m, ce qui génère une très importante perte ohmique.

Si l'on cherche cependant à optimiser la résistivité électrique, le matériau généralement conseillé pour des conducteurs électriques soumis à une forte intensité de courant électrique est le cuivre. Une étude expérimentale réalisée par le Demandeur a permis de déterminer la courbe de résistivité du cuivre en fonction de la température et de confirmer que le choix du cuivre permet de diminuer d'au minimum un facteur 10 les pertes ohmiques par rapport au matériau de référence sur toute la gamme de température de fonctionnement des systèmes à oxyde solide.

Cependant, l'une des contraintes fortes qu'il est nécessaire de prendre en considération est le problème de corrosion liée à l'environnement de l'empilement.

En se référant à la figure 3, l'empilement **20** est en effet enfermé dans une enceinte dite « thermique », dont la température est maintenue entre 650 et 900°C sous balayage d'air, un système électrochimique classique comprenant ainsi :

- l'électrolyseur EVHT **20,** par exemple celui décrit en relation avec les figures 1 et 2 et comprenant un ensemble de conduites **52, 54, 56, 58** pour l'alimentation et la collecte des gaz des anodes et des cathodes des cellules électrochimiques de l'électrolyseur ;
- une enceinte **60** dans laquelle est logée l'électrolyseur **20,** les conduites **52, 54, 56, 58** traversant une paroi de l'enceinte **60** pour leur connexion à des circuits d'alimentation et de collecte de gaz (non représentés). L'enceinte **60** comporte également une conduite d'entrée d'air **62,** et une conduite de sortie d'air **64,** l'enceinte **60** étant par exemple partout ailleurs hermétique aux gaz et aux liquides. La conduite **62** est apte à être connectée à un circuit d'alimentation d'air (non représenté) de manière à appliquer un balayage d'air de la zone chaude entourant l'électrolyseur **20,** l'air de balayage étant évacué par la conduite de sortie **64** ; et
- deux conducteurs électriques **66, 68** connectés aux bornes **30, 32** de l'empilement **20** et traversant l'enceinte **60** pour leur connexion à la source de courant **28.**

Dans ces conditions, deux conducteurs **66, 68** sous forme de tige en cuivre, dont une partie au moins est comprise dans l'enceinte **60,** vont s'oxyder très rapidement. En outre, le cuivre ne résiste pas à l'oxydation à haute température car l'oxyde formé à la surface n'est pas suffisamment étanche et adhérent pour protéger le métal sous-jacent. Les matériaux connus pour résister à l'oxydation à haute température sont les alliages chromino et alumino formeurs tels que les aciers inoxydables et les alliages de nickel inoxydables car ceux-ci forment de la chromine et/ou de l'alumine qui sont des oxydes beaucoup plus protecteurs. Cependant, comme cela a été dit plus haut, ces alliages ont une résistivité électrique telle que leur utilisation entraîne des pertes énergétiques importantes.

Une pile à oxyde solide à haute température, plus connue sous le nom de pile SOFC (pour « *solid oxyde fuel cell* ») connait des problèmes similaires. En effet, un électrolyseur EVHT et une pile SOFC sont des structures identiques, seul leur mode de fonctionnement étant différent, l'électrolyseur fonctionnant en mode réduction du gaz carbonique ($CO_2$) ou encore en mode co-électrolyse, c'est-à-dire avec un mélange de gaz en entrée cathodique composé de vapeur d'eau ($H_2O$) et de gaz carbonique ($CO_2$). Le mélange en sortie cathodique est alors composé d'hydrogène ($H_2$), de vapeur d'eau ($H_2O$), de monoxyde de carbone (CO) et de gaz carbonique ($CO_2$). En se référant à la figure 4, une cellule électrochimique constitutive d'une pile SOFC comprend les mêmes éléments (anode **12,** cathode **14,** électrolyte **16**) qu'une cellule d'électrolyseur, la cellule de la pile étant cependant alimentée, avec des débits constants, sur son anode par du dihydrogène et sur sa cathode par du dioxygène, et connectée à une charge *C* pour délivrer le courant électrique produit. Au regard du courant électrique produit, de plusieurs ampères, la pile connait donc les mêmes problèmes que l'électrolyseur.

## EXPOSE DE L'INVENTION

Une solution serait de protéger une tige de cuivre (ou tout au métal jugé approprié en termes de résistivité électrique) par un revêtement pour lui conférer une bonne résistance à l'oxydation, par exemple un revêtement de chromine ou d'alumine. Cela pose plusieurs problèmes. Tout d'abord il faut garantir l'étanchéité du revêtement et sa tenue sur le substrat cuivre lors du chauffage. Il faut souligner que le cuivre ayant un coefficient de dilatation thermique élevé, de fortes contraintes de dilatation thermique différentielle peuvent apparaître et endommager le revêtement et/ou l'interface revêtement/cuivre. En outre, à l'extrémité chaude de la tige il est nécessaire de réaliser une connexion électrique avec le stack sans exposer le cuivre. La connexion doit donc être faite sur le revêtement, sans endommager celui-ci, ce qui est techniquement difficile.

Une autre solution est d'enrober la tige en cuivre dans une gaine en matériau résistant à l'oxydation. De cette façon, le problème de résistance aux contraintes de dilatation thermique différentielle est résolu puisque les deux matériaux ne sont pas solidaires. Un tel assemblage (cuivre + gaine inoxydable) est déjà connu de l'état de la technique pour d'autres domaines d'application (e.g. un environnement d'acide fort à faible température, 50-80°C), notamment du document chinois CN202608143U qui décrit une barre en cuivre qui est simplement enfilée dans un tube en acier. Ce type de conducteur donne satisfaction à basse température et avec une faible température, mais il a été observé qu'il ne convenait pas en l'état pour les systèmes à oxyde solide. En effet, le faible contact entre âme conductrice et gaine a pour conséquence, vue la forte température, la détérioration du contact électrique entre les deux matériaux et une augmentation des pertes ohmiques.

En d'autres termes, il n'existe pas dans l'état de la technique de système optimisé de conduction électrique adapté à un fort courant électrique et supportant un cyclage thermique important en environnement oxydant.

Le but de la présente invention est de proposer un système électrochimique pourvu d'un dispositif de conduction électrique adapté à des courants de plusieurs centaines d'ampères et résistant à l'oxydation à haute température.

A cet effet l'invention a pour objet un conducteur électrique tel que défini dans la revendication 1.

L'invention se propose de mettre en forme une tige composée d'une âme (ou « coeur », ou « noyau ») en cuivre (ou tout autre métal jugé satisfaisant en termes de résistivité électrique) protégée par une gaine en métal inoxydable, en particulier en acier inoxydable ou alliage de nickel inoxydable, le tout soudé grâce au procédé de Compression Isostatique à Chaud (CIC). Ce type de soudure permet, sans ajout de métal d'apport, de réaliser un soudage par diffusion des différents matériaux. Ce soudage par diffusion est un procédé d'assemblage à l'état solide, qui consiste à appliquer une force à chaud sur les pièces à souder pendant un temps donné. Il est ainsi obtenu un joint entre l'âme et la gaine particulièrement résistant, et notamment un joint qui résiste au chauffage observé pour les dispositifs électrochimiques à haute température. L'invention permet donc de satisfaire un compromis entre trois contraintes antagonistes : une contrainte de minimisation des pertes par effet Joule, y compris au contact âme/gaine, une contrainte de résistance à l'oxydation et une contrainte de résistance mécanique face à de très forts écarts de température.

L'invention a également pour objet un procédé de fabrication d'un conducteur électrique tel que défini dans la revendication 3.

Selon un mode de réalisation du procédé, le soudage diffusion par compression isostatique à chaud comprend les étapes suivantes :

- nettoyage des surfaces par un moyen approprié (détergents et/ou solvants notamment) ;
- soudage par TIG (« *Tungsten Inert Gas* ») d'un tube de dégazage à une extrémité de la gaine ;
- insertion de la tige dans la gaine par l'autre extrémité ;
- soudage TIG d'un bouchon pour étanchéifier cette deuxième extrémité ;
- mise sous vide de la gaine par pompage via le tube de la première extrémité ;
- obturation de ce tube ;
- application d'un cycle de soudage diffusion par CIC à l'ensemble.

Selon un mode de réalisation du procédé :

- la tige est constituée de cuivre et la gaine est constituée d'alliage inoxydable ; et
- la compression isostatique à chaud consiste:
  - ◦ à porter l'ensemble formé de la tige et de la gaine à une température comprise entre 600°C et 1060°C, de préférence entre 800°C et 1000°C, notamment une température de 920°C ; et
  - ◦ à appliquer sur la gaine une pression comprise entre 500 bars et 1500 bars, de préférence entre 800 bars et 1200 bars, notamment une pression de 1020 bars ;
  - ◦ à appliquer un palier de pression et température d'une durée de 30 minutes à plusieurs heures, de préférence 1 heure à 3 heures, notamment 2 heures ;
  - ◦ à laisser refroidir l'ensemble et à dépressuriser.

L'invention a également pour objet une utilisation de deux conducteurs du type précité, respectivement comme deux conducteurs électriques d'un système électrochimique comportant :

- une enceinte pour la circulation d'air dans le volume délimité par celle-ci;
- un dispositif électrochimique logé dans l'enceinte, et formant électrolyseur de vapeur d'eau à haute température ou pile à combustible à haute température, le dispositif comprenant :
  - ◦ un empilement de cellules électrochimiques élémentaires comprenant chacune un électrolyte intercalé entre une cathode et une anode et connectées en série entre deux bornes électriques ; et
  - ◦ les deux conducteurs électriques respectivement connectés aux deux bornes électriques.

L'invention a également pour objet un système électrochimique comportant :

- une enceinte pour la circulation d'air dans le volume délimité par celle-ci;

- un dispositif électrochimique logé dans l'enceinte, et formant électrolyseur de vapeur d'eau à haute température ou pile à combustible à haute température, le dispositif comprenant :

  ◦ un empilement de cellules électrochimiques élémentaires comprenant chacune un électrolyte intercalé entre une cathode et une anode et connectées en série entre deux bornes électriques ; et
  ◦ deux conducteurs électriques respectivement connectés aux deux bornes électriques;

Selon l'invention, chaque conducteur électrique comporte :

- une tige constituée d'un premier matériau métallique ; et
- une gaine recouvrant entièrement la tige et constituée d'un deuxième matériau métallique inoxydable, de résistivité électrique supérieure à la résistivité électrique du premier matériau métallique, la tige et la gaine étant soudées l'une à l'autre à l'aide d'une compression isostatique à chaud.

## BREVE DESCRIPTION DES FIGURES

L'invention sera mieux comprise à la lecture de la description qui va suivre, donnée uniquement à titre d'exemple, et réalisée en relation avec les dessins annexés, dans lesquels des références identiques désignent des éléments identiques, et dans lesquels :

- la figure 1 est une vue schématique d'une cellule électrochimique élémentaire d'un électrolyseur EVHT ;
- la figure 2 est une vue schématique d'un empilement de cellules selon la figure 1 ;
- la figure 3 est une vue schématique d'un système incorporant un empilement selon la figure 2 ;
- la figure 4 est une vue schématique d'une cellule électrochimique d'une pile SOFC ;
- le figure 5 est une vue schématique d'un conducteur électrique selon l'invention ;
- la figure 6 est une vue schématique en coupe selon le plan C-C de la figure 5 ;
- la figure 7 est une vue schématique en perspective de la patte de raccordement, ou « sifflet », des figures 5 et 6 ; et
- les figures 8A à 8C sont des vues schématiques de l'embout et de la patte de raccordement selon l'invention, les cotes étant exprimées en millimètres, et correspondant à une gaine de diamètre intérieur égale à 10 millimètres.

## DESCRIPTION DETAILLEE DE L'INVENTION

En se référant aux figures 5 à 8, un conducteur électrique **70** selon l'invention est composé de plusieurs éléments :

- un ensemble **72** composé d'une tige en cuivre **74** insérée dans une gaine **76** en acier inoxydable,
- une patte de raccordement **78,** ou « sifflet », en alliage inoxydable, soudée à une extrémité de l'ensemble **72.** La patte obstrue hermétiquement cette extrémité, et évite ainsi le passage de gaz, et a une forme complémentaire de la plaque de l'électrolyseur sur laquelle la patte **78** est fixée pour la connexion électrique de l'électrolyseur ;
- un embout de fermeture **80** comportant par un tube **82** permettant de tirer au vide de l'autre extrémité de l'ensemble **72,** l'embout **80** et son tube **82** étant réalisés en alliage inoxydable. L'embout obstrue hermétiquement ladite extrémité de l'ensemble **72,** hormis un canal central **84** qui le traverse de part en part et qui est en communication avec le tube **82.**

Cet assemblage **72** est traité en CIC pour obtenir un soudage par diffusion garantissant la pérennité des propriétés mécaniques et électriques, même après de nombreux cycles thermiques.

L'alliage inoxydable de la gaine **76** et de la patte de raccordement **78** est choisi en fonction des contraintes thermiques auxquelles est exposé le conducteur électrique **70.** Notamment, pour une gamme de température jusqu'à 900°C, la gaine et la patte sont réalisées en inconel® 600.

Un procédé de fabrication du conducteur électrique venant d'être décrit, destiné à être utilisé en tant que conducteur électrique pour l'amenée d'un courant dans un système électrochimique, par exemple celui des figures 1 à 4, consiste donc dans un premier temps à fabriquer les différents éléments venant d'être décrits (tige, gaine, patte, embout). Ces éléments sont alors, optionnellement, nettoyés à l'aide de détergents, de solvants ou tout autre moyen approprié.

La tige **74** est ensuite insérée dans la gaine **76,** la gaine **76** dépassant de chaque côté de la tige **74** pour accueillir la patte **78** et l'embout **80.** Ces derniers sont alors insérés aux deux extrémités de la gaine, puis soudés à la gaine notamment au moyen d'un soudage « TIG » (« *Tungsten Inert Gas* »), optionnellement avec un apport de matière composé d'acier inoxydable, en particulier de l'acier référencé « AISI 316L ».

Le gaz emprisonné entre la gaine **76** et la tige de cuivre **74** est alors enlevé avant la réalisation de l'opération de Compression Isostatique à Chaud (CIC). Pour cela, une pompe à vide est donc raccordée sur le tube **82** de façon à réaliser le vide à l'intérieur de la gaine. Il est ensuite réalisé un queusotage du tube **84** de façon à l'obturer de manière hermétique et définitive.

Le procédé se poursuit alors par la mise en oeuvre de la CIC avec les conditions opératoires suivantes :

- à porter l'ensemble formé de la tige et de la gaine à une température comprise entre 600°C et 1060°C, de préférence entre 800°C et 1000°C, notamment une température de 920°C ; et
- à appliquer sur la gaine une pression comprise entre 500 bars et 1500 bars, de préférence entre 800 bars et 1200 bars, notamment une pression de 1020 bars ;
- à appliquer un palier de pression et température d'une durée de 30 minutes à plusieurs heures, de préférence 1 heure à 3 heures, notamment 2 heures ;
- à laisser refroidir l'ensemble et à dépressuriser.

L'assemblage est alors récupéré et utilisé de la façon suivante. L'extrémité comportant la patte **78** est l'extrémité chaude, la patte est éventuellement percée perpendiculairement à l'axe de la gaine pour être vissée sur le stack. Il est utile de préciser ici que la patte peut avoir une autre géométrie que celle de cet exemple. Elle peut par exemple être cylindrique et destinée à entrer dans un perçage ou serrée entre deux demi coquilles solidaires du dispositif à alimenter. L'autre extrémité est l'extrémité froide. Le tube **82** est généralement coupé, voire même l'embout **80.**

Il a été décrit une tige en cuivre. L'invention s'applique à d'autres métaux bon conducteurs électriques mais sensibles à l'oxydation: le nickel, l'argent ou des alliages de cuivre durcis par dispersoïdes.

Il a été décrit une application de l'invention à un électrolyseur de vapeur d'eau à haute température mais elle s'applique également à un co-électrolyseur haute température alimenté avec un mélange de vapeur d'eau ($H_2O$) et de gaz carbonique ($CO_2$). L'invention s'applique également à une pile à combustible à oxyde solide à haute température constituée d'un empilement de cellules élémentaires électrochimiques, tel que décrit précédemment.

L'invention s'applique à un système réversible, pile à combustible et électrolyseur haute température.

L'invention s'applique aux piles ou électrolyseur "moyenne température", i.e. 400°C, ou encore PCFC, en anglais pour « *Proton Ceramic Fuel Cell* ».

L'invention s'applique aux systèmes précédemment décrits fonctionnant à pression atmosphérique mais aussi à des systèmes sous pression.

En dehors du domaine technique des systèmes électrochimiques à oxyde solide, l'invention s'applique à tous les domaines pour lesquels il y a un besoin de conduction électrique en milieu oxydant à haute température ou dans des conditions conduisant à la dégradation rapide des matériaux conducteurs de l'électricité.

Dans l'exemple décrit le conducteur possède une extrémité froide et une extrémité chaude, cette dernière étant équipée d'une patte. Dans d'autres applications de l'invention le conducteur peut posséder deux extrémités chaudes, par exemple pour connecter deux éléments chauffants résistifs sans pertes. Dans ce cas chacune des extrémités du conducteur possède une forme adaptée à la connexion électrique désirée. Pour cela, la géométrie de l'embout **80** peut être modifiée. Par exemple, on peut choisir de couper le tube **82** après assemblage mais de ne pas couper l'embout **80** : sachant que le perçage **84** est éliminé pendant l'opération de CIC au même titre que le jeu âme/gaine, l'embout **80** protège de l'oxydation l'extrémité de l'âme.

## Revendications

**1.** Conducteur électrique (70) comportant :

- une tige (74) constituée d'un premier matériau métallique en cuivre, en nickel, en argent ou en alliage de cuivre durci par dispersoïdes ; et
- une gaine (76) recouvrant entièrement la tige et constituée d'un deuxième matériau métallique inoxydable, de résistivité électrique supérieure à la résistivité électrique du premier matériau métallique,

dans lequel la tige (74) et la gaine (76) sont soudées l'une à l'autre à l'aide d'une compression isostatique à chaud.

**2.** Conducteur électrique selon la revendication 1, dans lequel la tige (74) est constituée de cuivre et la gaine (76) est constituée d'alliage inoxydable.

**3.** Procédé de fabrication d'un conducteur électrique comprenant :

- la réalisation d'une tige (74) constituée d'un premier matériau métallique en cuivre, en nickel, en argent ou en alliage de cuivre durci par dispersoïdes; et
d'une gaine (76) recouvrant entièrement la tige, la gaine étant constituée d'un deuxième matériau métallique, ledit deuxième matériau métallique :
  - ◦ étant inoxydable ;
  - ◦ ayant une résistivité électrique supérieure à la résistivité électrique du premier matériau métallique ;
- l'application d'un vide au moins à une première extrémité de la gaine de manière à pomper le gaz présent entre la tige et la gaine ; et
- la soudure de la tige (74) et de la gaine (76) par une compression isostatique à chaud.

**4.** Procédé de fabrication d'un conducteur électrique selon la revendication 3, dans lequel le soudage diffusion par compression isostatique à chaud comprend les étapes suivantes :

- le nettoyage des surfaces, notamment au moyen d'un détergent et/ou d'un solvant ;
- le soudage par soudure TIG d'un tube de dégazage à une extrémité de la gaine
- l'insertion de la tige dans la gaine par l'autre extrémité
- le soudage TIG d'un bouchon pour étanchéifier cette deuxième extrémité
- la mise sous vide de la gaine par pompage via le tube de la première extrémité
- l'obturation de ce tube
- l'application d'un cycle de soudage diffusion par CIC à l'ensemble.

**5.** Procédé de fabrication d'un conducteur électrique selon la revendication 3 ou 4 :

- dans lequel la tige (74) est constituée de cuivre et la gaine (76) est constituée d'alliage inoxydable ; et
- dans lequel la compression isostatique à chaud consiste:
  - ◦ à porter l'ensemble formé de la tige et de la gaine à une température comprise entre 600°C et 1060°C, de préférence entre 800°C et 1000°C, notamment une température de 920°C ; et
  - ◦ à appliquer sur la gaine une pression comprise entre 500 bars et 1500 bars, de préférence entre 800 bars et 1200 bars, notamment une pression de 1020 bars ;
  - ◦ à appliquer un palier de pression et température d'une durée de 30 minutes à plusieurs heures, de préférence 1 heure à 3 heures, notamment 2 heures ;
  - ◦ à laisser refroidir l'ensemble et à dépressuriser.

**6.** Utilisation de deux conducteurs électriques conformes à l'une quelconque des revendications 1 et 2, respectivement comme deux conducteurs électriques d'un système électrochimique comportant :

- une enceinte pour la circulation d'air dans le volume délimité par celle-ci;
- un dispositif électrochimique logé dans l'enceinte, et formant électrolyseur de vapeur d'eau à haute température ou pile à combustible à haute température, le dispositif comprenant :
  - ◦ un empilement de cellules électrochimiques élémentaires comprenant chacune un électrolyte intercalé entre une cathode et une anode et connectées en série entre deux bornes électriques ; et
  - ◦ les deux conducteurs électriques respectivement connectés aux deux bornes électriques.

**7.** Système électrochimique comportant :

- une enceinte (60) pour la circulation d'air dans le volume délimité par celle-ci;
- un dispositif électrochimique (20) logé dans l'enceinte, et formant électrolyseur de vapeur d'eau à haute température ou pile à combustible à haute température, le dispositif comprenant :
  - ◦ un empilement (20) de cellules électrochimiques élémentaires (10) comprenant chacune un électrolyte (16) intercalé entre une cathode et une anode (12, 14) et connectées en série entre deux bornes électriques ; et
  - ◦ deux conducteurs électriques respectivement connectés aux deux bornes électriques;

***caractérisé* en ce que** chaque conducteur électrique comporte :

- une tige (74) constituée d'un premier matériau métallique ; et
- une gaine (76) recouvrant entièrement la tige et constituée d'un deuxième matériau métallique inoxydable, de résistivité électrique supérieure à la résistivité électrique du premier matériau métallique,

la tige et la gaine étant soudées l'une à l'autre à l'aide d'une compression isostatique à chaud.

**8.** Système électrochimique selon la revendication 7, ***caractérisé* en ce que** la tige est constituée de cuivre et **en ce que** la gaine est constituée d'acier inoxydable.

## Patentansprüche

**1.** Elektrischer Leiter (70) mit:

- einem Stab (74) bestehend aus einem ersten metallischen Material aus dispersoidgehärtetem Kupfer, Nickel, Silber oder einer Kupferlegierung; und
- einer Umhüllung (76), die den Stab vollständig bedeckt und aus einem zweiten rostfreien metallischen Material besteht, dessen spezifischer elektrischer Widerstand größer ist als der spezifische elektrische Widerstand des ersten metallischen Materials,

wobei der Stab (74) und die Umhüllung (76) mittels heißisostatischem Pressen miteinander verschweißt sind.

**2.** Elektrischer Leiter nach Anspruch 1, wobei der Stab (74) aus Kupfer und die Umhüllung (76) aus einer rostfreien Legierung bestehen.

**3.** Verfahren zur Herstellung eines elektrischen Leiters, umfassend:

- die Herstellung eines Stabs (74) bestehend aus einem ersten metallischen Material aus dispersoidgehärtetem Kupfer, Nickel, Silber oder einer Kupferlegierung; und
einer Umhüllung (76), die den Stab vollständig bedeckt, wobei die Umhüllung aus einem zweiten metallischen Material besteht, wobei das zweite metallische Material:

◦ rostfrei ist;
◦ einen spezifischen elektrischen Widerstand aufweist, der größer ist als der spezifische elektrische Widerstand des ersten metallischen Materials;

- das Anlegen eines Vakuums zumindest an einem ersten Ende der Umhüllung, um das zwischen dem Stab und der Umhüllung vorhandene Gas abzupumpen; und
- das Verschweißen des Stabs (74) und der Umhüllung (76) durch heißisostatisches Pressen.

**4.** Verfahren zur Herstellung eines elektrischen Leiters nach Anspruch 3, wobei das Diffusionsschweißen durch heißisostatisches Pressen die folgenden Schritte umfasst:

- das Reinigen der Oberflächen, insbesondere mit einem Detergens und/oder einem Lösungsmittel;
- das Schweißen durch WIG-Schweißen eines Entgasungsrohrs an einem Ende der Umhüllung
- das Einführen des Stabs in die Umhüllung am anderen Ende
- das WIG-Schweißen eines Stopfens zum Abdichten dieses zweiten Endes
- das Erzeugen eines Vakuums der Umhüllung durch Pumpen über das Rohr am ersten Ende
- das Verschließen dieses Rohres
- das Anwenden eines CIC-Diffusionsschweißzyklus auf die gesamte Einheit.

**5.** Verfahren zur Herstellung eines elektrischen Leiters nach Anspruch 3 oder 4:

- wobei der Stab (74) aus Kupfer und die Umhüllung (76) aus einer rostfreien Legierung bestehen; und
- wobei das heißisostatische Pressen darin besteht:

o die aus dem Stab und der Umhüllung gebildete Einheit auf eine Temperatur zwischen 600°C und 1060°C, vorzugsweise zwischen 800°C und 1000°C, insbesondere auf eine Temperatur von 920°C, zu bringen; und
◦ an die Umhüllung einen Druck zwischen 500 bar und 1500 bar, vorzugsweise zwischen 800 bar und 1200 bar, insbesondere einen Druck von 1020 bar anzulegen;
◦ eine Druck- und Temperaturstufe für eine Dauer von 30 Minuten bis zu mehreren Stunden, vorzugsweise 1 Stunde bis 3 Stunden, insbesondere 2 Stunden, anzulegen;
◦ die Einheit abkühlen zu lassen und den Druck abzulassen.

**6.** Verwendung von zwei elektrischen Leitern gemäß einem der Ansprüche 1 und 2, jeweils als zwei elektrische Leiter eines elektrochemischen Systems mit:

- einer Kammer für die Luftzirkulation in dem von ihr begrenzten Volumen;
- einer elektrochemischen Vorrichtung, die in der Kammer untergebracht ist und einen Hochtemperatur-Wasserdampf-Elektrolyseur oder eine Hochtemperatur-Brennstoffzelle bildet, wobei die Vorrichtung umfasst:

◦ einen Stapel elektrochemischer Elementarzellen, die jeweils einen Elektrolyten umfassen, der zwischen einer Kathode und einer Anode eingefügt und zwischen zwei elektrischen Anschlüssen in Reihe geschaltet sind; und
◦ die beiden elektrischen Leiter, die jeweils mit den beiden elektrischen Anschlüssen verbunden sind.

**7.** Elektrochemisches System mit:

- einer Kammer (60) für die Luftzirkulation in dem von ihr begrenzten Volumen;
- einer elektrochemischen Vorrichtung (20), die in der Kammer untergebracht ist und einen Hochtemperatur-Wasserdampf-Elektrolyseur oder eine Hochtemperatur-Brennstoffzelle bildet, wobei die Vorrichtung umfasst:

◦ einen Stapel (20) elektrochemischer Elementarzellen (10), die jeweils einen Elektrolyten (16) umfassen, der zwischen einer Kathode und einer Anode (12, 14) eingefügt und zwischen zwei elektrischen Anschlüssen in Reihe geschaltet sind; und
◦ zwei elektrische Leiter, die jeweils mit den beiden elektrischen Anschlüssen verbunden sind;

***dadurch gekennzeichnet*, dass** jeder elektrischer Leiter umfasst:

- einen Stab (74), bestehend aus einem ersten metallischen Material; und
- eine Umhüllung (76), die den Stab vollständig bedeckt und aus einem zweiten rostfreien metallischen Material besteht, dessen spezifischer elektrischer Widerstand größer ist als der spezifische elektrische Widerstand des ersten metallischen Materials,

wobei der Stab und die Umhüllung mittels heißisostatischem Pressen miteinander verschweißt sind.

**8.** Elektrochemisches System nach Anspruch 7, ***dadurch gekennzeichnet*, dass** der Stab aus Kupfer und die Umhüllung aus rostfreiem Stahl besteht.

## Claims

**1.** Electric conductor (70) comprising:

- a rod (74) made of a first copper, nickel, silver or copper alloy metal material hardened by dispersoids; and
- a sheath (76) fully covering the rod and made of a second stainless metal material, of electric resistivity greater than the electric resistivity of the first metal material,

wherein the rod (74) and the sheath (76) are welded to one another using a hot isostatic pressing.

**2.** Electric conductor according to claim 1, wherein the rod (74) is made of copper and the sheath (76) is made of stainless alloy.

**3.** Method for manufacturing an electric conductor comprising:

- the production of a rod (74) made of a first copper, nickel, silver or copper alloy metal material hardened by dispersoids; and a sheath (76) fully covering the rod, the sheath being made of a second metal material, said second metal material:

◦ being stainless;
◦ having an electric resistivity greater than the electric resistivity of the first metal material;

- the application of a vacuum at least at a first end of the sheath so as to pump the gas present between the rod and the sheath; and
- the welding of the rod (74) and of the sheath (76) by a hot isostatic pressing.

**4.** Method for manufacturing an electric conductor according to claim 3, wherein the diffusion welding by hot isostatic pressing comprises the following steps:

- the cleaning of the surfaces, in particular by means of a detergent and/or a solvent;
- the welding by TIG welding of a degassing tube at an end of the sheath;
- the insertion of the rod in the sheath by the other end;
- the TIG welding of a stopper to seal this second end;
- the application of a vacuum on the sheath by pumping via the tube of the first end;
- the blocking of this tube;
- the application of a diffusion welding cycle by HIP to the assembly.

**5.** Method for manufacturing an electric conductor according to claim 3 or 4:

- wherein the rod (74) is made of copper and the sheath (76) is made of stainless alloy; and
- wherein the hot isostatic pressing consists of:

◦ bringing the assembly formed of the rod and the sheath to a temperature of between 600°C and 1060°C, preferably between 800°C and 1000°C, in particular a temperature of 920°C; and
◦ applying on the sheath, a pressure of between 500 bars and 1500 bars, preferably between 800 bars and 1200 bars, in particular a pressure of 1020 bars;
◦ applying a pressure and temperature plateau of a duration of 30 minutes to several hours, preferably 1 hour to 3 hours, in particular 2 hours;
◦ letting the assembly cool and depressurise.

**6.** Use of two electric conductors according to any one of claims 1 and 2, respectively as two electric conductors of an electrochemical system comprising:

- a chamber for air circulation in the volume delimited by it;
- an electrochemical device housed in the chamber, and forming a high-temperature water vapour electrolyser or high-temperature fuel cell, the device comprising:

◦ a stack of elementary electrochemical cells, each comprising an electrolyte inserted between a cathode and an anode and connected in series between two electric terminals; and
◦ the two electric conductors respectively connected to the two electric terminals.

**7.** Electrochemical system comprising:

- a chamber (60) for air circulation in the volume delimited by it;
- an electrochemical device (20) housed in the chamber, and forming a high-temperature water vapour electrolyser or high-temperature fuel cell, the device comprising:

◦ a stack (20) of elementary electrochemical cells (10), each comprising an electrolyte (16) inserted between a cathode and an anode (12, 14) and connected in series between two electric terminals; and
◦ two electric conductors respectively connected to the two electric terminals;

***characterised*** **in that** each electric conductor comprises:

◦ a rod (74) made of a first metal material; and
◦ a sheath (76) fully covering the rod and made of a second stainless metal material, of electric resistivity greater than the electric resistivity of the first metal material,

the rod and the sheath being welded to one another using a hot isostatic pressing.

**8.** Electrochemical system according to claim 7, ***characterised*** **in that** the rod is made of copper and **in that** the sheath is made of stainless steel.

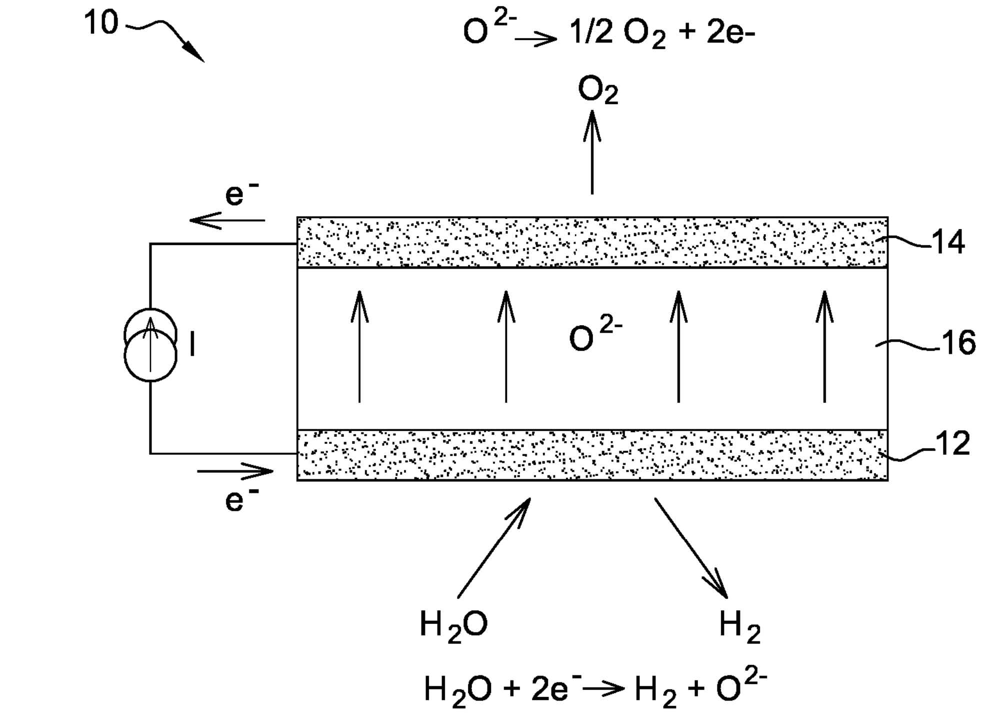
10
$O^{2-} \rightarrow 1/2\ O_2 + 2e-$
$O_2$
$e^-$
14
I
$O^{2-}$
16
12
$e^-$
$H_2O$
$H_2$
$H_2O + 2e^- \rightarrow H_2 + O^{2-}$

Fig. 1

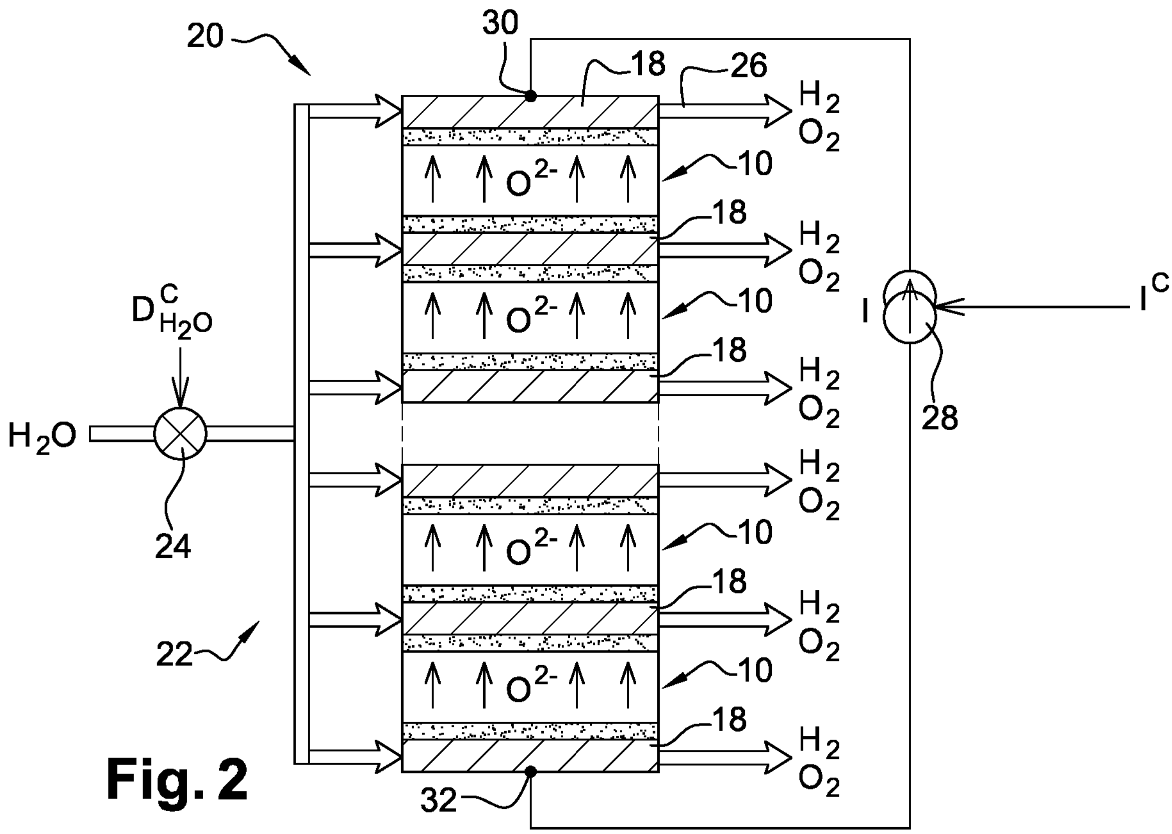
20
30
18
26
$H_2$
$O_2$
$O^{2-}$
10
$D^C_{H_2O}$
I
$I^C$
$H_2O$
28
24
22
32

Fig. 2

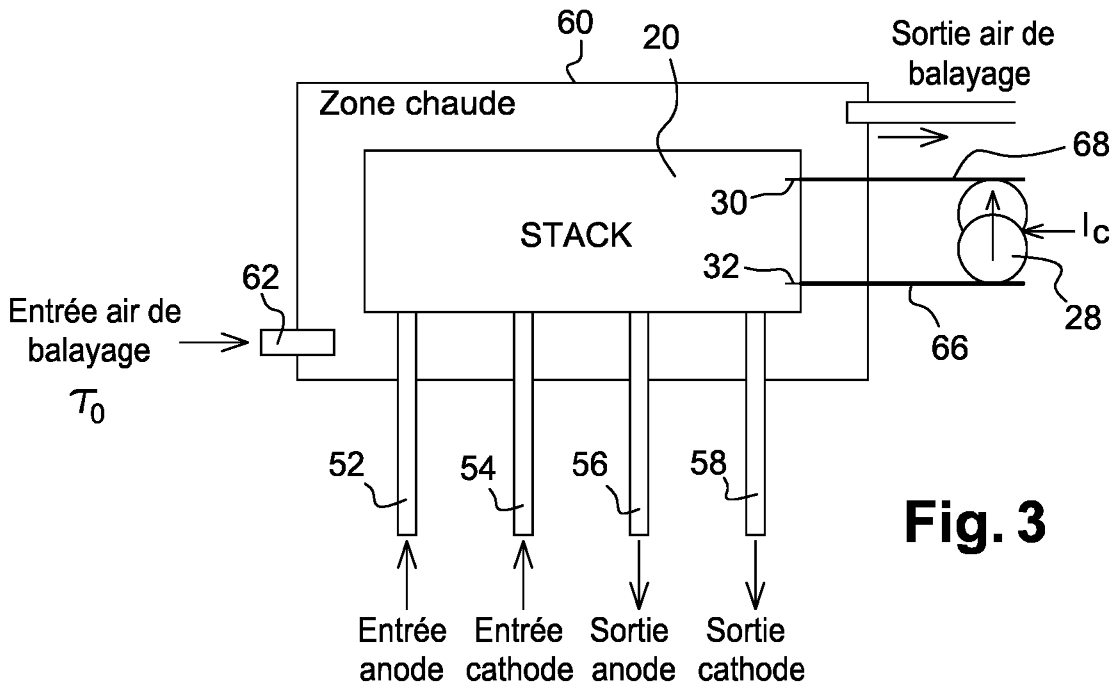
60
20
Sortie air de balayage
Zone chaude
68
STACK
30
32
Ic
62
Entrée air de balayage
$T_0$
28
66
52
54
56
58
Entrée anode
Entrée cathode
Sortie anode
Sortie cathode

Fig. 3

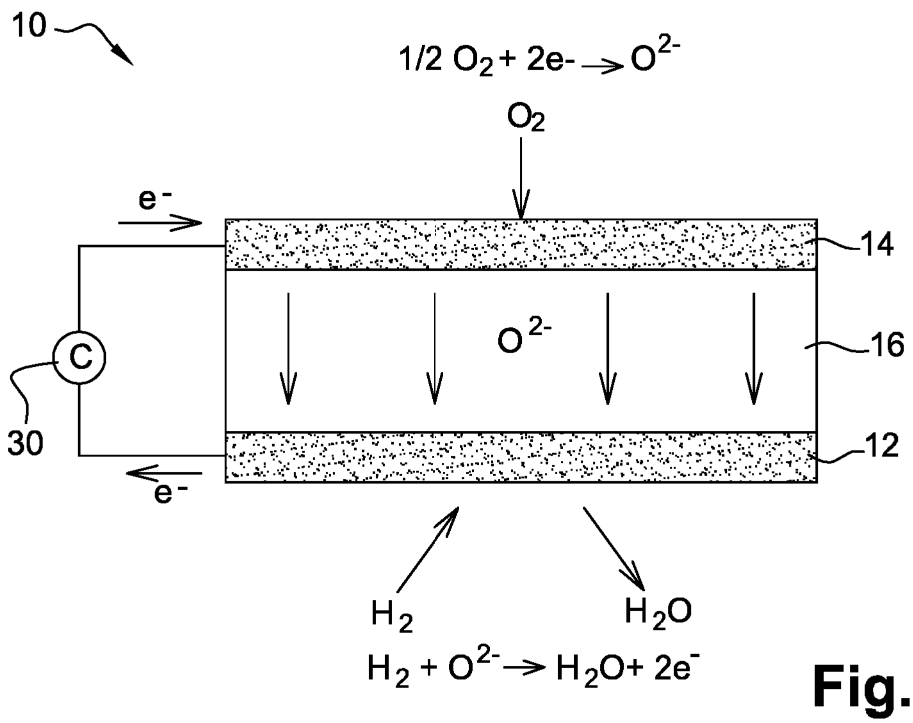
10
1/2 $O_2$ + 2e- → $O^{2-}$
$O_2$
e-
14
$O^{2-}$
16
C
30
12
e-
$H_2$
$H_2O$
$H_2 + O^{2-} \rightarrow H_2O + 2e^-$

Fig. 4

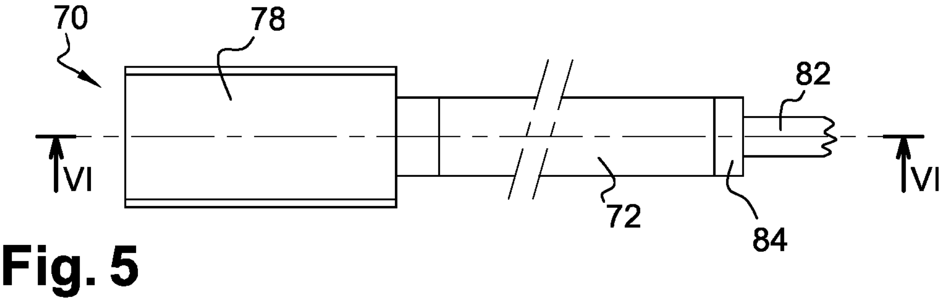


Fig. 5

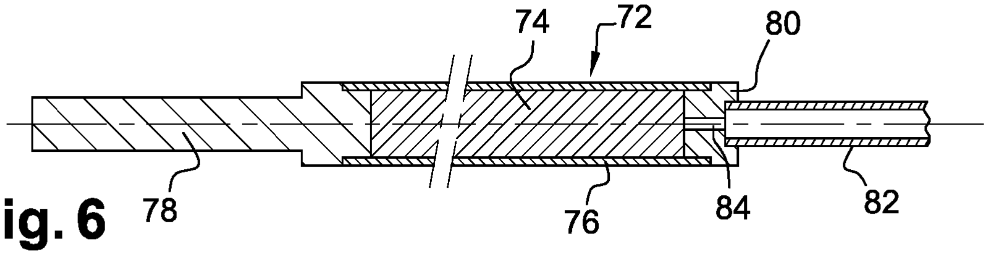


Fig. 6

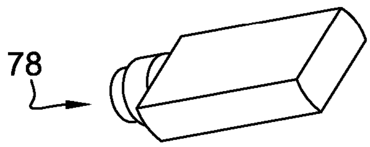


Fig. 7

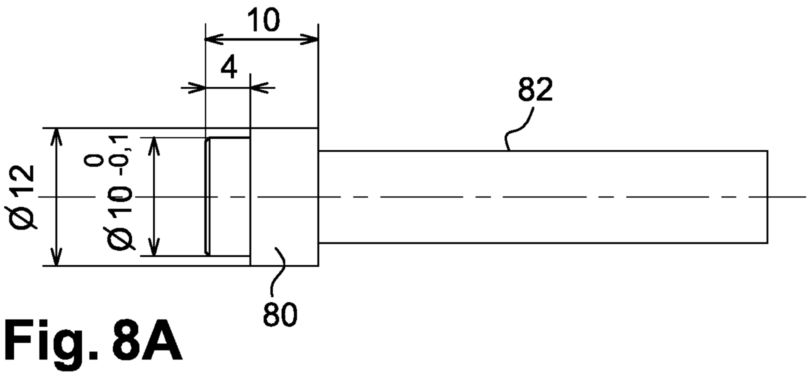


Fig. 8A

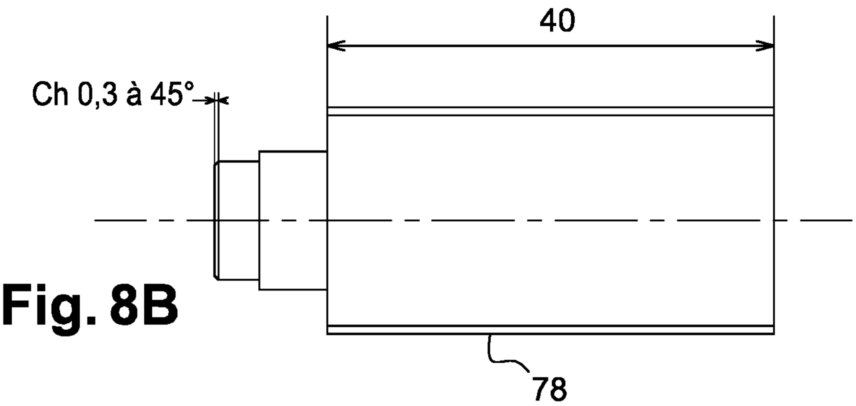


Fig. 8B

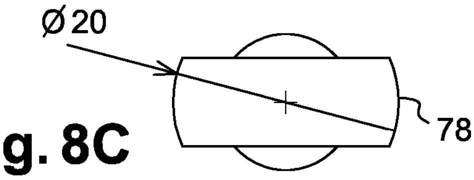


Fig. 8C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2011110676 A
- CN 202608143 U